# EUROPÄISCHE PATENTSCHRIFT

(11) **EP 2 062 767 B1**
(45) Veröffentlichungstag und Bekanntmachung des Hinweises auf die Patenterteilung: **13.01.2010**
(21) Anmeldenummer: 08020338.3
(22) Anmeldetag: 21.11.2008
(51) Int. Cl.: B60J 1/20

(54) **Fahrzeugrollo mit Rollfeder und Federherz**
Vehicle roller blind with tensioning spring and spring core
Store de véhicule doté d'un ressort enrouleur et d'un noyau de ressort

(30) Priorität: 22.11.2007 DE 102007056297
(43) Veröffentlichungstag der Anmeldung: 27.05.2009
(73) Patentinhaber: HS Products Engineering GmbH, 82239 Alling (DE)
(72) Erfinder: Ziegenbein, Werner, D-81929 München (DE); Heckmayr, Thomas, D- 86871 Ramming (DE)
(74) Vertreter: Eisenführ, Speiser & Partner

(56) Entgegenhaltungen:
- EP-A- 1 555 151
- EP-A- 1 598 517
- DE-A1-102005 014 670

## Beschreibung

Die Erfindung betrifft ein Fahrzeugfensterrollo gemäß dem Oberbegriff des Anspruchs 1. Insbesondere betrifft die Erfindung ein Fahrzeugfensterrollo, welches enthält: eine Rollobahn zum zumindest teilweisen Abdecken eines Fahrzeugfensters, eine Wickelwelle zum Ab- und Aufwickeln der Rollobahn, wobei die Wickelwelle mit ihren beiden Wellenenden in jeweils einer fahrzeugfesten Lagereinrichtung drehbar gelagert ist, und wenigstens eine Spiral- oder Rollfeder, welche mit ihrem inneren Federende in Wirkverbindung mit einem Wellenende der Wickelwelle steht sowie diese in Aufwickelrichtung vorspannt und welche mit ihrem äußeren Federende an einem der fahrzeugfesten Lagereinrichtungen abgestützt ist.

Die gattungsbildende DE 10 2005 024 682 A1 zeigt ein Rollo, das in einem Gehäuse aufgenommen ist, wobei das Gehäuse ein Mittelteil aufweist, dessen Enden von einem Deckel bzw. von einem Federgehäuse verschlossen sind.

Ein Fahrzeugfensterrollo der eingangs genannten Art geht aus der EP-Patentanmeldung 1 555 151 hervor. Zur Herstellung der Wirkverbindung zwischen der Spiral- bzw. Rollfeder und der Wickelwelle ist dort ein einstückig ausgebildeter, langgestreckter Federmitnehmer vorgesehen, der mit seinem einen Ende in das die Wickelwelle bildende Rohr eingeschoben ist und der mit seinem anderen Ende, auf dem die Spiralfeder aufgeschoben ist, drehbar in der zugehörigen Lagereinrichtung gelagert ist. Zum Übertragen eines Drehmomentes von der Spiralfeder auf die Wickelwelle weist dasjenige Ende des Federmitnehmers, welches in das die Wickelwelle bildende Rohr eingeschoben ist, im Querschnitt eine rechteckförmige bzw. quadratische Form oder eine mit Vorsprüngen versehene Kreisform auf. Derjenige Abschnitt der hohlen Wickelwelle, in den wiederum der Federmitnehmer eingeschoben wird, ist mit einer entsprechend komplizierten Gegenkontur versehen. Daher müssen zur Herstellung der verhältnismäßig komplizierten Außenkontur des Federmitnehmers und der ebenso komplizierten Innenkontur der hohlen Wickelwelle entweder entsprechend kompliziert gestaltete Spritzwerkzeuge angefertigt oder aber diese Bauteile entsprechend bearbeitet werden. Beides ist zeitaufwändig und damit in der Produktion teuer.

Aus der DE-Offenlegungsschrift 10 2005 014 670 geht weiterhin ein Fahrzeugfensterrollo hervor, bei dem im Inneren der ebenfalls hohlen Wickelwelle eine Schraubenfeder angeordnet ist. Diese Schraubenfeder ist mit ihrem einen Ende drehfest mit einem im Inneren der hohlen Wickelwelle angeordneten Drehmomentübertragungsteil und mit ihrem anderen Ende an einem Lagerzapfen einer der beiden Lagereinrichtungen befestigt. Beide Lagereinrichtungen dieses vorbekannten Fahrzeugfensterrollos sind unmittelbar am Rahmen des Kraftfahrzeuges anbringbar. Auch bei dieser vorbekannten Lösung ist ein verhältnismäßig komplizierter Aufbau und eine verhältnismäßig große Zahl an Einzelteilen notwendig, um die gewünschte Funktion des Fahrzeugfensterrollos sicherzustellen.

Es ist Aufgabe der vorliegenden Erfindung, ein Fahrzeugfensterrollo der eingangs genannten Art bereitzustellen, welches mit einfach herzustellenden Bauteilen schnell und betriebssicher montiert werden kann.

Die vorstehende Aufgabe wird durch die Merkmale des Anspruchs 1 gelöst. In den sich daran anschließenden Ansprüchen 2 bis 10 finden sich vorteilhafte Ausgestaltungen hierzu.

Durch das Vorsehen eines in der Lagereinrichtung drehbar gelagerten Federherzes, mit dem das innere Ende der Spiralfeder in Wirkverbindung steht und in das das vorzugsweise zapfenförmige Wellenende drehmomentfest einsteckbar ist, besteht die Möglichkeit, die Wickelwelle einfach auszugestalten. Insbesondere bedarf es nicht, wie dies demgegenüber bei dem Stand der Technik der Fall ist, einer kompliziert herzustellenden Innenkontur der Wickelwelle. Insbesondere kann die Wickelwelle entweder als hohles Rohr mit an den stimseitigen Enden dieses Rohres drehfest eingesteckten, zapfenartigen Wellenenden ausgestaltet werden oder aber aus einem kreisförmigen Vollmaterial mit zapfenförmig abgedrehten Wellenenden angefertigt werden. Beide Lösungen sind im Vergleich zu den aus dem Stand der Technik bekannten Lösungen deutlich einfacher herzustellen, wodurch eine erhebliche Kostenersparnis bei der Produktion des erfindungsgemäßen Fahrzeugfensterrollos möglich ist.

Die einzelne bzw. beide Lagereinrichtungen des erfindungsgemäßen Fahrzeugfensterrollos weist bzw. weisen an ihrer Außenseite Mittel zum Anbringen der Lagereinrichtungen an dem Fahrzeug auf, sodass diese unmittelbar mit Teilen des Fahrzeuges verbunden werden, sodass eine eventuell vorzusehende Trägereinheit in Form eines plattenförmigen oder profilierten Trägers, z.B. Strangpressprofils, oder Rollogehäuses zur Aufnahme des Rollos und der beiden Lagereinrichtungen, wie im Stand der Technik zum Anbringen des Fahrzeugfensterrollos an einem Fahrzeug vorgesehen, entfällt. Die beiden Lagereinrichtungen sind derart ausgestaltet, dass sie am Fahrzeugaufbau oder einer Fahrzeugkomponente, wie der Fahrzeugtür, befestigt werden können. Bei der Rollobetätigung auftretende Kräften werden somit direkt vom Fahrzeugaufbau aufgenommen. Somit kann aufgrund der Ausgestaltung der beiden insbesondere als Federgehäuse ausgebildeten Lagereinrichtungen eine direkte Montage am Fahrzeug erfolgen. Dies kann durch Schrauben, Klipsen, Klemmen, Formschluss oder anderweitig ausgeführt werden. Außerdem wird bei vollständigem Rolloeinzug das Rollo durch die beiden Lagereinrichtungen gehalten. Hierbei stößt der am ausziehbaren Rolloende vorgesehene Zugstab an den Lagereinrichtungen an. Hierzu können die beiden Lagereinrichtungen Stoppvorsprünge, insbesondere Stopp- bzw. Anschlagarme aufweisen.

Um einen besonders kompakten Aufbau des Fahrzeugfensterrollos im Bereich der Lagereinrichtung erzielen zu können, ist es vorteilhaft, wenn das Federherz von der Spiralfeder umschlossen ist.

Für eine sichere Halterung der Spiral- bzw. Rollfeder ist es weiterhin von Vorteil, dass die axiale Länge des Federherzes zumindest gleich der axialen Länge der Spiralfeder ist. Besonders bevorzugt ist, dass die axiale Länge des Federherzes größer als die axiale Länge der Spiralfeder ist, da somit das Federherz beidseitig über die axiale Länge der Spiralfeder bzw. deren Breite überstehen kann.

Um mit einfachen Mitteln eine drehbare Lagerung des Federherzes in der Lagereinrichtung sicherstellen zu können, kann weiterhin vorgesehen werden, dass das Federherz an seiner dem Wellenende der Wickelwelle gegenüberliegenden Ende einen Lagerabschnitt, vorzugsweise einen Lagerzapfen, zum drehbaren Lagern des Federherzes in der Lagereinrichtung aufweist.

Weist die Lagereinrichtung eine topfartige Ausnehmung auf, in der die Spiralfeder und das Federherz aufgenommen sind, so kann hierdurch der angestrebte kompakte Aufbau des Fahrzeugfensterrollos weiter unterstützt werden. Dabei ist es von Vorteil, wenn das Federherz in der Weise in der Lagereinrichtung angeordnet ist, dass es an der zu der Wickelwelle weisenden Seite der Lagereinrichtung mit dem axialen Ende der Lagereinrichtung abschließt. Mit anderen Worten fluchtet das stirnseitige Ende des Federherzes mit dem stirnseitigen Ende der Lagereinrichtung. In diesem Zusammenhang ist es weiterhin von Vorteil, wenn die axiale Länge des Federherzes gleich oder kleiner der Tiefe der topfartigen Ausnehmung der Lagereinrichtung entspricht.

Ist an der Lagereinrichtung ein vorzugsweise mit dieser einstückig verbundener Anschlag, vorzugsweise Anschlagarm, zum Begrenzen der Aufwickelbewegung der Rollobahn vorgesehen, so kann hierdurch eine sichere Außerbetriebsposition der Rollobahn definiert werden.

Weist bzw. weisen die einzelne bzw. beide Lagereinrichtungen des erfindungsgemäßen Fahrzeugfensterrollos an ihrer Außenseite Mittel zum Anbringen der Lagereinrichtungen an dem Fahrzeug auf, so können diese unmittelbar mit Teilen des Fahrzeuges verbunden werden, sodass eine eventuell vorzusehende Trägereinheit in Form eines plattenförmigen oder profilierten Trägers, z.B. Strangpressprofils, oder Rollogehäuses zur Aufnahme des Rollos und der beiden Lagereinrichtungen, wie im Stand der Technik zum Anbringen des Fahrzeugfensterrollos an einem Fahrzeug vorgesehen, entfallen kann. Die beiden Lagereinrichtungen sind derart ausgestaltet, dass sie am Fahrzeugaufbau oder einer Fahrzeugkomponente, wie der Fahrzeugtür, befestigt werden können. Bei der Rollobetätigung auftretende Kräften werden somit direkt vom Fahrzeugaufbau aufgenommen. Somit kann aufgrund der Ausgestaltung der beiden insbesondere als Federgehäuse ausgebildeten Lagereinrichtungen eine direkte Montage am Fahrzeug erfolgen. Dies kann durch Schrauben, Klipsen, Klemmen, Formschluss oder anderweitig ausgeführt werden. Außerdem wird bei vollständigem Rolloeinzug das Rollo durch die beiden Lagereinrichtungen gehalten. Hierbei stößt der am ausziehbaren Rolloende vorgesehene Zugstab an den Lagereinrichtungen an. Hierzu können die beiden Lagereinrichtungen Stoppvorsprünge, insbesondere Stopp- bzw. Anschlagarme aufweisen.

Um den bereits mehrfach angesprochenen kompakten Aufbau des erfindungsgemäßen Fahrzeugfensterrollos zu unterstützen, kann weiterhin vorgesehen sein, dass die Lagereinrichtung eine Durchbrechung zum Durchführen von Antriebselementen für zumindest das Abwickeln der Rollobahn aufweist.

Grundsätzlich kann das erfindungsgemäße Fahrzeugfensterrollo von Hand, mittels mechanischer Antriebselemente, wie Federn, oder eines oder mehrerer Motoren angetrieben werden. Im letzteren Fall ist es von Vorteil, wenn die Lagereinrichtung an seinem der Wickelwelle gegenüberliegenden Ende eine Motoraufnahme zum drehfesten Halten eines Antriebsmotors für die Rollobahn aufweist.

Weitere vorteilhafte Ausgestaltungen sowie Ausführungsbeispiele des erfindungsgemäßen Fahrzeugfensterrollos werden nachstehend in Verbindung mit den beigefügten Zeichnungsfiguren erläutert. Die bei der Beschreibung der Ausführungsbeispiele verwendeten Begriffe "links", "rechts", "unten" und "oben" beziehen sich auf eine Ausrichtung dieser Figuren mit normal lesbaren Bezugszeichen und Figurenbezeichnungen. Hierbei ist:
- Figur 1: eine perspektivische, auseinandergezogene Darstellung eines ersten Ausführungs- beispiels des erfindungsgemäßen Fahrzeugfensterrollos;
- Figur 2: eine Schnittansicht einer Lagereinrichtung des in Fig. 1 gezeigten Fahrzeugfenster- rollos;
- Figur 3: eine perspektivische, auseinandergezogene Darstellung eines zweiten Ausfüh- rungsbeispiels des erfindungsgemäßen Fahrzeugfensterrollos; und
- Figur 4: eine teilweise aufgebrochene Seitenansicht einer Lagereinrichtung des in Figur 3 gezeigten Fahrzeugfensterrollos.

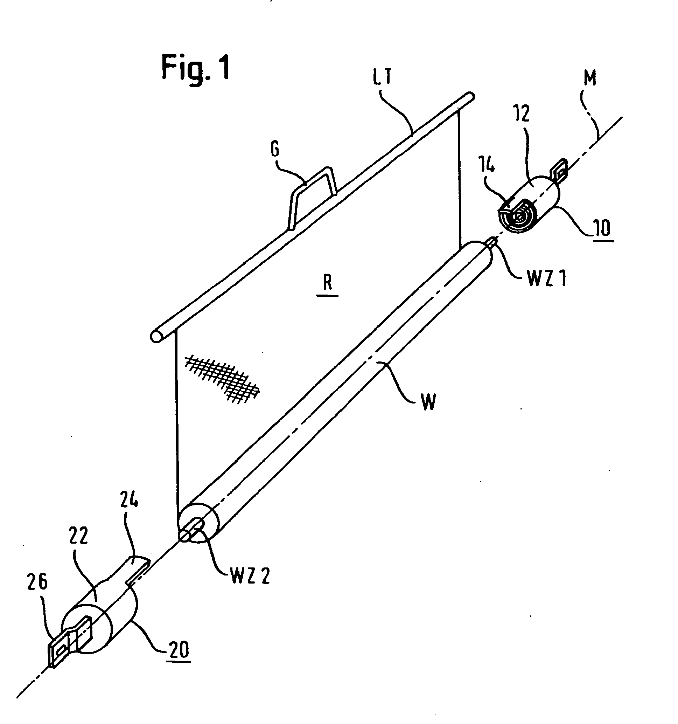

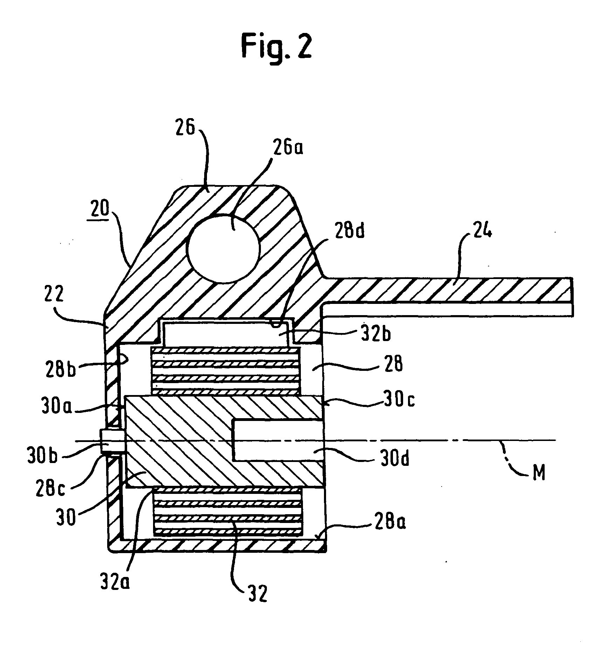

In den Fig. 1 und 2 ist ein erstes Ausführungsbeispiel des erfindungsgemäßen Fahrzeugfensterrollos schematisch wiedergegeben. Dieses Fahrzeugfensterrollo weist als wesentliche Baugruppen die Rollobahn R, die Wickelwelle W zum Auf- und Abwickeln der Rollobahn R sowie eine rechte und linke Lagereinrichtung 10, 20 auf.

Die Rollobahn R dient zum teilweisen oder vollständigen Abdecken eines nicht näher dargestellten Fahrzeugfensters. Die Form der Rollobahn R ist dem abzudeckenden Fenster zumindest teilweise angepasst. An der Oberkante der Rollobahn R ist eine Leiste LT befestigt, um die Rollobahn R in die ausgefahrene oder aufgewickelte Stellung zu bringen. Weiterhin ist an der Leiste LT ein Griff G angebracht, um die Rollobahn R bei diesem Ausführungsbeispiel von Hand aus ihrer auf der Wickelwelle W aufgewickelten Position in die abgewickelte bzw. abschattende Position zu überführen. Für den umgekehrten Bewegungsvorgang, d.h. zum Aufwickeln der Rollobahn R auf die Wickelwelle W, ist ein nachstehend noch näher beschriebener Federmotor vorgesehen.

Wie weiterhin aus Fig. 1 ersichtlich ist, ist die Wickelwelle W aus einem einen kreisförmigen Querschnitt aufweisendes Vollprofil aus vorzugsweise Kunststoff hergestellt, wobei die beiden stirnseitigen Wellenenden zu ebenfalls einen kreisförmigen Querschnitt aufweisenden Lagerzapfen WZ1, WZ2 abgedreht sind. Mittels dieser Lagerzapfen WZ1, WZ2 ist die Wickelwelle W drehbar und axial fest in den Lagereinrichtungen 10, 20 gelagert. Selbstverständlich kann die Wickelwelle W auch durch ein kreisringförmiges Rohrprofil gebildet sein, bei dem die Lagerzapfen WZ1, WZ2 in die offenen, stimseitigen Enden des die Wickelwelle W bildenden Rohrprofils dreh- und axialfest eingesetzt sind.

Sofern dies notwendig sein sollte, kann die Wickelwelle W im begrenzten Umfang auch axial beweglich in den Lagereinrichtungen 10, 20 gehalten sein. Dies kann insbesondere dann erforderlich sein, wenn die Fensterfläche von der eines regelmäßigen Rechtecks bzw. Quadrats abweicht.

Anzumerken ist noch, dass die Mittellängsachse M der Wickelwelle W auch die Mittellängsachse des Fahrzeugfensterrollos und der Lagereinrichtungen 10, 20 ist.

In Fig. 2 ist die in Fig. 1 linke Lagereinrichtung 20 im Längsschnitt schematisch wiedergegeben. Diese Lagereinrichtung 20 weist ein Lagergehäuse 22 aus vorzugsweise Kunststoff auf, welches im Wesentlichen einen kreisringförmigen Querschnitt besitzt. An der Oberseite des Gehäuses 22 ist ein nachstehend noch näher beschriebener Anschlagarm 24 sowie ein ebenfalls nachstehend noch näher erläutertes Montageelement 26 einstückig angeformt. Wie aus Fig. 2 weiter ersichtlich ist, besitzt das Lagergehäuse 22 eine topfförmige Lagerausnehmung 28, welche koaxial zu der Mittellängsachse M des Lagergehäuses 22 bzw. des erfindungsgemäßen Fahrzeugfensterrollos im Inneren des Gehäuses 22 angeordnet ist. Die topfförmige Lagerausnehmung 28 besitzt eine kreiszylindrische Innenwand 28a sowie einen an dem linken stimseitigen Ende des Lagergehäuses 22 vorgesehenen, in einem Winkel von 90° zu der Innenwand 28a verlaufenden Boden 28b. Koaxial zur Mittellängsachse M ist in diesem Boden 28b eine Durchgangsbohrung 28c vorgesehen, die zur drehbaren Lagerung eines nachstehend noch näher erläuterten Federherzes 30 dient.

An der oberen Außenwand des Lagergehäuses 22 ist der bereits vorstehend erwähnte Anschlagarm 24 einstückig angeformt. Der Anschlagarm 24, der in einem Winkel von 90°, bezogen auf die Außenumfangsfläche des Lagergehäuses 22, von dem Lagergehäuse 22 seitlich absteht, erstreckt sich von dem rechten stimseitigen Ende des Lagergehäuses 22 in Richtung zu der in Fig. 2 nicht näher dargestellten Wickelwelle W im Wesentlichen parallel zur Mittellängsachse M. Dieser Anschlagarm 24 dient zum Definieren der Endposition der Rollobahn R beim Aufwickeln der Rollobahn R auf die Wickelwelle W.

Weiterhin ist an der oberen Außenwand des Lagergehäuses 22 der ebenfalls vorstehend erwähnte Montageabschnitt 26 einstückig angeformt, der bei diesem Ausführungsbeispiel durch einen in einem Winkel von 90° von der Außenumfangsfläche des Lagergehäuses 22 abstehender Flansch mit einer kreisförmigen Durchgangsdurchbrechung 26a gebildet ist. Die kreisförmige Durchgangsdurchbrechung 26a bzw. das Auge 26a dient zum unmittelbaren Anbringen des Lagergehäuses 22 an dem Fahrzeug.

Im Inneren der topfartigen Ausnehmung 28 des Lagergehäuses 22 ist das bereits vorstehend erwähnte Federherz 30 drehbar angeordnet. Dieses besitzt einen kreiszylindrischen Querschnitt, wobei der Außendurchmesser des Federherzes 30 deutlich kleiner ist als der Innendurchmesser der topfförmigen Ausnehmung 28. An dem linken stimseitigen Ende 30a des Federherzes 30 ist dieses mit einem Lagerzapfen 30b versehen, der einstückig an dem Federherz 30 angeformt ist und der im montierten Zustand des Federherzes 30 in der topfförmigen Ausnehmung 28 mit der Mittellängsachse M des Fahrzeugfensterrollos fluchtet. Der Durchmesser des Lagerzapfens 30b ist dabei sehr viel kleiner als der Durchmesser des zylindrischen Hauptkörpers des Federherzes 30. Der Lagerzapfen 30b dient zum drehbaren Lagern des Federherzes 30 in der Durchgangsdurchbrechung 28c der topfförmigen Ausnehmung 28 des Lagergehäuses 22.

An dem dem Lagerzapfen 30b gegenüberliegenden stimseitigen Ende 30c des Federherzes 30 ist eine koaxial zur Mittellängsachse M des Fahrzeugfensterrollos angeordnete, zylindrische Ausnehmung 30d vorgesehen. Diese zylindrische sacklochförmige Ausnehmung 30d dient zur drehfesten und gegebenenfalls axial festen Aufnahme des Lagerzapfens WZ2 der Wickelwelle W.

Weiterhin ist in der topfartigen Ausnehmung 28 des Lagergehäuses 22 eine Spiral- bzw. Rollfeder 32 angeordnet. Das innere Ende 32a dieser Spiralfeder 32 ist axial und drehmomentfest mit dem Federherz 30 verbunden, wogegen sich das äußere Ende 32b der Feder 32 in einer Vertiefung 28d in der Innenwand 28a der topfartigen Ausnehmung 28 abstützt. Wie weiterhin aus Fig. 2 ersichtlich ist, ist die axiale Länge bzw. Breite der Spiralfeder 32 kleiner als die axiale Länge des Federherzes 30. Darüber hinaus ist die Spiralfeder 32 vorzugsweise mittig auf dem Federherz 30 angeordnet.

Die in Fig. 1 ebenfalls gezeigte rechte Lagereinrichtung 10 des erfindungsgemäßen Fahrzeugfensterrollos kann ebenso aufgebaut sein wie die linke, vorstehend näher beschriebene Lagereinrichtung 20. Insbesondere können in dem Lagergehäuse 12 dieser Lagereinrichtung 10 ebenfalls ein Federherz (30) mit einer Spiralfeder (32) angeordnet sein. Es ist aber auch möglich, dass die Lagereinrichtung 10 lediglich den Wellenzapfen WZ1 der Wickelwelle W drehbar lagert.

Wie aus Fig. 1 noch ersichtlich ist, kann der Montageabschnitt 26 auch an dem von der Wickelwelle W wegweisenden stimseitigen Ende des Lagergehäuses 22 in der Weise einstückig angeformt sein, dass er mit der Mittellängsachse M des erfindungsgemäßen Fahrzeugfensterrollos fluchtet, sich aber von der Wickelwelle W weg erstreckt.

Wird die Rollobahn R von der Wickelwelle W abgewickelt, indem ein Nutzer an dem Griff G die Leiste LT der Rollobahn R erfasst und diese nach oben von der Wickelwelle W wegzieht, wird die Spiralfeder 32 bei der Drehung der Wickelwelle W über das Federherz 30 gespannt. Um das Fahrzeugfensterrollo in der gewünschten Abschattungsstellung zu halten, können an dem Fahrzeugfenster bzw. an der Innenseite der Tür des Fahrzeuges eine oder mehrere nicht näher dargestellte Einhängeeinrichtungen vorgesehen sein, in die beispielsweise der Griff G oder die Enden der Leiste LT eingehängt werden können.

Soll die Rollobahn R wieder auf der Wickelwelle W aufgewickelt werden, so hängt der Nutzer den Griff G aus den Einhängeeinrichtungen aus. Die in der Spiralfeder 32 gespeicherte Energie dient dann zum Aufwickeln der Rollobahn R auf der Wickelwelle W. Zur Definierung einer Endposition dieses Aufwickelvorganges sind die beiden an den Lagergehäusen 12, 22 vorgesehenen Anschlagarme 14, 24 vorgesehen.

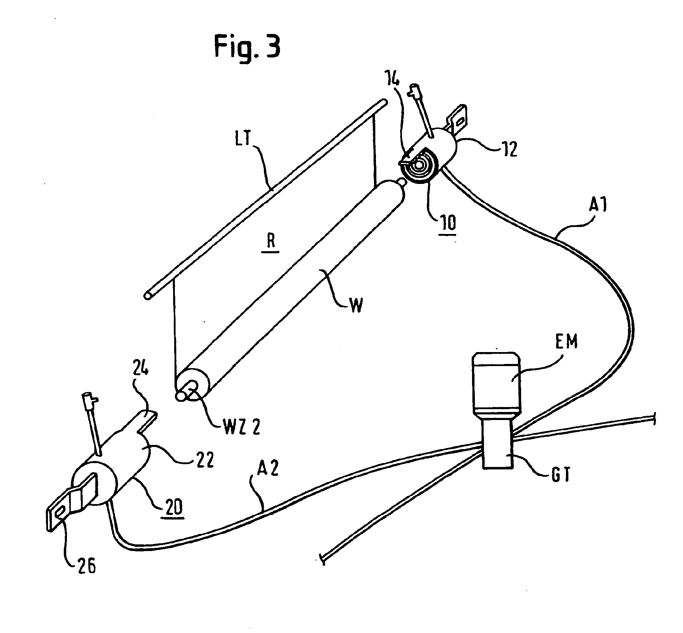

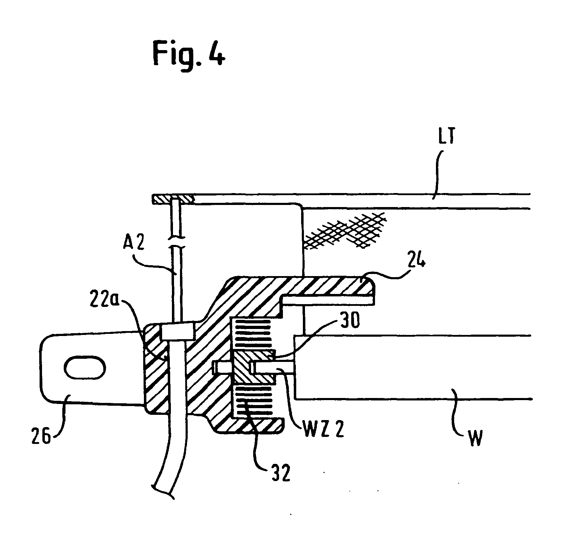

In den Fig. 3 und 4 ist ein weiteres Ausführungsbeispiel des erfindungsgemäßen Fahrzeugfensterrollos gezeigt. Nachstehend wird lediglich auf die Unterschiede zu dem Fahrzeugfensterrollo gemäß den Fig. 1 und 2 eingegangen.

Ein wesentlicher Unterschied für das Fahrzeugfensterrollo gemäß den Fig. 3 und 4 besteht darin, dass die Rollobahn R motorisch ausgefahren werden kann. Hierzu ist ein Elektromotor EM vorgesehen, welcher über ein Getriebe GT mit Antriebselementen A1, A2, die beispielsweise durch Bürstenkabel gebildet sein können, in Wirkverbindung steht. Die Antriebselemente A1, A2 sind fest an der Leiste LT der Rollobahn R angebracht.

Für einen kompakten Aufbau sind die Antriebselemente A1, A2 durch Durchgangsdurchbrechungen 22a der Lagergehäuse 22 der beiden Lagereinrichtungen 10, 20 hindurchgeführt, wie dies aus Fig. 4 ersichtlich ist. Der übrige Aufbau des Fahrzeugfensterrollos gemäß dieser Ausführungsform stimmt mit dem des Ausführungsbeispiels gemäß den Fig. 1 und 2 überein. Dies gilt insbesondere für die Anordnung der Spiralfeder 32 und des Federherzes 30.

### Bezugszeichenliste

- A1: Antriebselement
- A2: Antriebselement
- EM: Elektromotor
- G: Griff
- GT: Getriebe
- LT: Leiste
- M: Mittellängsachse
- R: Rollobahn
- W: Wickelwelle
- WZ1: Lagerzapfen
- WZ2: Lagerzapfen, Wellenzapfen
- 10,20: Lagereinrichtung
- 12, 22: Lagergehäuse
- 22a: Durchgangsdurchbrechung
- 14,24: Anschlagarm
- 26: Montageelement, Montageabschnitt
- 26a: Durchgangsdurchbrechung
- 28: topfförmige Ausnehmung
- 28a: kreiszylindrische Innenwand
- 28b: Boden
- 28c: Durchgangsdurchbrechung
- 28d: Vertiefung
- 30: Federherz
- 30a: linkes stirnseitiges Ende
- 30b: Lagerzapfen
- 30c: rechtes stirnseitiges Ende
- 30d: zylindrische Ausnehmung
- 32: Spiral- bzw. Rollfeder
- 32a: inneres Ende
- 32b: äußeres Ende

## Patentansprüche

1. Fahrzeugfensterrollo, enthaltend eine Rollobahn (R) zum zumindest teilweisen Abdecken eines Fahrzeugfensters, eine Wickelwelle (W) zum Ab- und Aufwickeln der Rollobahn (R), wobei die Wickelwelle (W) mit ihren beiden Wellenenden (WZ1, WZ2) in jeweils einer fahrzeugfesten Lagereinrichtung (10, 20) drehbar gelagert ist, und wenigstens eine Spiralfeder (32), welche mit ihrem inneren Federende (32a) in Wirkverbindung mit einem Wellenende (WZ1, WZ2) der Wickelwelle (W) steht sowie diese in Aufwickelrichtung vorspannt und welche mit ihrem äußeren Federende (32b) an einem der fahrzeugfesten Lagereinrichtungen (10, 20) abgestützt ist,
**dadurch gekennzeichnet, dass** das innere Ende (32a) der Spiralfeder (32) über ein in der Lagereinrichtung (10, 20) drehbar gelagertes Federherz (30) in Wirkverbindung mit der Wickelwelle (W) steht, deren Wellenende (WZ1, WZ2) drehmomentfest in das Federherz (30) einsteckbar ist.

2. Fahrzeugfensterrollo nach Anspruch 1,
**dadurch gekennzeichnet, dass** das Federherz (30) von der Spiralfeder (32) umschlossen ist.

3. Fahrzeugfensterrollo nach Anspruch 1 oder 2,
**dadurch gekennzeichnet, dass** die axiale Länge des Federherzes (30) zumindest gleich der axialen Länge der Spiralfeder (32) ist.

4. Fahrzeugfensterrollo nach einem der Ansprüche 1 bis 3,
**dadurch gekennzeichnet, dass** das Federherz (30) an seiner dem Wellenende (WZ1, WZ2) der Wickelwelle (W) gegenüberliegenden Ende einen Lagerabschnitt, vorzugsweise einen Lagerzapfen (30b) zum drehbaren Lagern des Federherzes (30) in der Lagereinrichtung (10, 20) aufweist.

5. Fahrzeugfensterrollo nach einem der Ansprüche 1 bis 4,
**dadurch gekennzeichnet, dass** die Lagereinrichtung (10, 20) eine topfartige Ausnehmung (28) aufweist, in der die Spiralfeder (32) und das Federherz (30) aufgenommen sind.

6. Fahrzeugfensterrollo nach Anspruch 5,
**dadurch gekennzeichnet, dass** das Federherz (30) eine axiale Länge aufweist, die zumindest annährend der Tiefe der topfartigen Ausnehmung (28) der Lagereinrichtung (10, 20) entspricht.

7. Fahrzeugfensterrollo nach Anspruch 5 oder 6,
**dadurch gekennzeichnet, dass** sich das äußere Ende (32b) der Spiralfeder (32) an der Innenwand (28a) der topfartigen Ausnehmung (28) der Lagereinrichtung (10, 20) abstützt.

8. Fahrzeugfensterrollo nach einem der Ansprüche 1 bis 7,
**dadurch gekennzeichnet, dass** die Lagereinrichtung (10, 20) einen Anschlagarm (14, 24) zum Begrenzen der Aufwickelbewegung der Rollobahn (R) aufweist.

9. Fahrzeugfensterrollo nach einem der Ansprüche 1 bis 8,
**dadurch gekennzeichnet, dass** die Lagereinrichtung (10, 20) an ihrer Außenseite Mittel zum Anbringen der Lagereinrichtung (10, 20) an dem Fahrzeug aufweist.

10. Fahrzeugfensterrollo nach einem der Ansprüche 1 bis 9,
**dadurch gekennzeichnet, dass** die Lagereinrichtung zur unmittelbaren Befestigung an einem Teil des Fahrzeugaufbaus, insbesondere am Rahmen einer Fahrzeugtür ausgebildet ist.

11. Fahrzeugfensterrollo nach einem der Ansprüche 1 bis 10,
**dadurch gekennzeichnet, dass** die Lagereinrichtung (10, 20) eine Durchbrechung (22a) zum Durchführen von Antriebselementen (A1, A2) für zumindest das Abwickeln der Rollobahn (R) aufweist.

## Claims

1. Roller blind for a vehicle window, comprising a roller blind web (R) for at least partially covering a vehicle window, a winding shaft (W) for winding and unwinding the roller blind web (R), wherein the winding shaft (W) is supported at its two shaft ends (WZ1, WZ2) in respective bearing means (10, 20) fixed to the vehicle, and at least one coil spring (32), the inner spring end (32a) of which is operatively connected to a shaft end (WZ1, WZ2) of the winding shaft (W) and is biasing the same in winding direction, and the outer spring end (32b) of which is supported at a bearing means (10, 20) fixed to the vehicle,
**characterized in that** the inner end (32a) of the coil spring (32) is operatively connected to the winding shaft (W) via a spring heart (30) rotatably supported in the bearing means (10, 20), wherein the shaft end (WZ1, WZ2) of said winding shaft is able to be inserted into the spring heart (30) in a torque proof manner.

2. Roller blind for a vehicle window as claimed in claim 1,
**characterized in that** the spring heart (30) is surrounded by the coil spring (32).

3. Roller blind for a vehicle window as claimed in claim 1 or 2,
**characterized in that** the axial length of the spring heart (30) is at least equal to the axial length of the coil spring (32).

4. Roller blind for a vehicle window as claimed in any one of the claims 1 to 3,
**characterized in that** the spring heart (30) comprises at its end opposite to the shaft end (WZ1, WZ2) of the winding shaft (W) a bearing portion, preferably a bearing journal (30b), for rotatably supporting the spring heart (30) at the bearing means (10, 20).

5. Roller blind for a vehicle window as claimed in any one of the claims 1 to 4,
**characterized in that** the bearing means (10, 20) has a cup-like recess (28) accommodating the coil spring (32) and the spring heart (30).

6. Roller blind for a vehicle window as claimed in claim 5,
**characterized in that** the spring heart (30) has an axial length corresponding at least approximately to the depth of the cup-like recess (28) of the bearing means (10, 20).

7. Roller blind for a vehicle window as claimed in claim 5 or 6,
**characterized in that** the outer end (32b) of the coil spring (32) is supported at the inner wall (28a) of the cup-like recess (28) of the bearing means (10, 20).

8. Roller blind for a vehicle window as claimed in any one of the claims 1 to 7,
**characterized in that** the bearing means (10, 20) has a stop arm (14, 24) for restricting the winding movement of the roller blind web (R).

9. Roller blind for a vehicle window as claimed in any one of the claims 1 to 8,
**characterized in that** the bearing means (10, 20) at its outer side comprises means for attaching the bearing means (10, 20) to the vehicle.

10. Roller blind for a vehicle window as claimed in any one of the claims 1 to 9,
**characterized in that** the bearing means is designed to be directly attached to a part of the vehicle body, in particular to the frame of a vehicle door.

11. Roller blind for a vehicle window as claimed in any one of the claims 1 to 10,
**characterized in that** the bearing means (10, 20) comprises an aperture (22a) for passing driving elements (A1, A2) used for at least unwinding the roller blind web (R).

## Revendications

1. Store pour fenêtre de voiture, comportant un pan de store (R) pour couvrir au moins partiellement une fenêtre de voiture, un arbre d'enroulement (W) pour dérouler et enrouler le pan de store (R), l'arbre d'enroulement (W) étant logé mobile à ses deux extrémités (WZ1, WZ2), chacune dans un dispositif de logement (10, 20) fixé à la voiture, et au moins un ressort spiral (32) qui, à son extrémité intérieure (32a), est lié de façon opératoire à une extrémité (WZ1, WZ2) de l'arbre d'enroulement et précontraint ce dernier dans le sens d'enroulement et s'appuie avec son extrémité extérieure (32b) contre l'un des dispositifs de logement (10, 20) fixés à la voiture,
**caractérisé en ce que** l'extrémité intérieure (32a) du ressort spiral (32) est en liaison opératoire avec l'arbre d'enroulement (W) par l'intermédiaire d'un coeur de ressort logé mobile dans le dispositif de logement (10, 20), l'extrémité (WZ1, WZ2) de l'arbre étant susceptible d'être introduite dans le coeur de ressort (30) et résistante à la torsion.

2. Store pour fenêtre de voiture selon la revendication 1,
**caractérisé en ce que** le coeur de ressort (30) est entouré par le ressort spiral (32).

3. Store pour fenêtre de voiture selon la revendication 1 ou 2,
**caractérisé en ce que** la longueur axiale du coeur de ressort (30) est au moins égale à la longueur axiale du ressort spiral (32).

4. Store pour fenêtre de voiture selon l'une quelconque des revendications 1 à 3,
**caractérisé en ce que** le coeur de ressort (30) comprend, à son extrémité opposée à l'extrémité (WZ1, WZ2) de l'arbre d'enroulement (W), une section de logement, de préférence un tourillon (30b), pour loger le coeur de ressort (30) mobile dans le dispositif de logement (10, 20).

5. Store pour fenêtre de voiture selon l'une quelconque des revendications 1 à 4,
**caractérisé en ce que** le dispositif de logement (10, 20) comprend une cavité (28) sous forme de pot dans laquelle le ressort spiral (32) et le coeur de ressort (30) sont logés.

6. Store pour fenêtre de voiture selon la revendication 5,
**caractérisé en ce que** le coeur de ressort (30) présente une longueur axiale qui correspond au moins approximativement à la profondeur de la cavité (28) sous forme de pot du dispositif de logement (10, 20).

7. Store pour fenêtre de voiture selon la revendication 5 ou 6,
**caractérisé en ce que** l'extrémité extérieure (32b) du ressort spiral (32) s'appuie contre la paroi intérieure (28a) de la cavité (28) sous forme de pot du dispositif de logement (10, 20).

8. Store pour fenêtre de voiture selon l'une quelconque des revendications 1 à 7,
**caractérisé en ce que** le dispositif de logement (10, 20) comprend un bras de butée (14, 24) pour limiter le mouvement d'enroulement du pan de store (R).

9. Store pour fenêtre de voiture selon l'une quelconque des revendications 1 à 8,
**caractérisé en ce que** le dispositif de logement (10, 20) comprend à sa face extérieure des dispositifs de fixation pour fixer le dispositif de logement (10, 20) à la voiture.

10. Store pour fenêtre de voiture selon l'une quelconque des revendications 1 à 9,
**caractérisé en ce que** le dispositif de logement est prévu pour être fixé directement à une partie de la carrosserie de la voiture, notamment à l'encadrement d'une porte de voiture.

11. Store pour fenêtre de voiture selon l'une quelconque des revendications 1 à 10,
**caractérisé en ce que** le dispositif de logement (10, 20) comprend une ouverture (22a) pour y passer des éléments d'entraînement (A1, A2) assurant au moins le déroulement du pan de store (R).
